# EUROPEAN PATENT APPLICATION

(11) **EP 4 566 885 A1**
(43) Date of publication of application: **11.06.2025**
(21) Application number: 23214436.0
(22) Date of filing: 05.12.2023
(51) Int. Cl.: B60Q 3/16, B60Q 3/80, B60K 35/22, B60K 35/28, B60K 35/81

(54) **GENERATIVE AUTOMOTIVE IN-CABIN LIGHTING**

(71) Applicant: Harman Becker Automotive Systems GmbH, 76307 Karlsbad (DE)
(72) Inventor: AMTHOR, Peter, 81827 München (DE)
(74) Representative: Kraus & Lederer PartGmbB

(57) **Abstract**

The invention relates to a vehicle lighting system (100) comprising a display system (300) comprising at least one display (310-330), an interface (210) configured to receive sensor data related to a vehicle environment, and a control unit configured to control the display system, to receive the sensor data and to determine a free part of the display system not used for displaying information needed by any passenger of the vehicle, wherein the control unit is configured to determine a color for the free part of the display system based on the sensor data and to illuminate the free part with the determined color.

## Description

### Technical Field

The present application relates to a vehicle lighting system and to a method for operating a vehicle lighting system.

### Background

An illumination system or lighting system in a vehicle include various lighting components for illuminating a vehicle inside. The lighting system plays a crucial role in ensuring that the driver of the vehicle can see clearly the environment ahead of the vehicle and at the same time the interior of the vehicle. These light systems are often located in various parts of the cabin including footwells, door panels or the center console. Furthermore lighting systems incorporated into a ceiling of the vehicle cabin are known to create a comfortable environment for the passengers. As light sources halogen lighting or LED lighting might be used, however for those additional lighting the upfront costs for installing the light sources in the different components of the vehicle are considerable and even though LEDs are energy efficient they still generate some heat which may require effective heat dissipation mechanisms. Furthermore, advanced LED systems may require complex control systems for color changing and intensity adjustment potentially adding complexity and cost.

### Summary

Accordingly a need exists to overcome the above-identified drawbacks and to provide an efficient way for illuminating an interior of a vehicle cabin.

This need is met by the features of the independent claims. Further aspects are described in the dependent claims.

According to a first aspect a vehicle lighting system is provided comprising a display system comprising at least one display. The vehicle lighting system furthermore comprises a n interface configured to receive sensor data related to the vehicle environment and the system comprises a control unit configured to control the display system, to receive the sensor data and to determine a free part of the display system not used for displaying information needed by any passenger of the vehicle. The control unit is configured to determine a color for the free part of the display system based on the sensor data and is configured to illuminate the free part with the determined color.

In nowadays vehicles one will find large displays which are used to display any kind of information required for the driver or requested by any other passenger in the vehicle. Sometimes even a plurality of different displays are provided within a vehicle. Some of the display sections or parts will not be used for displaying any useful information. They might not display anything at all. The vehicle lighting system is configured to determine the free part of the display system not used by any passenger and the free part can be used for illumination of the vehicle cabin by any color, be it a desired color or a predefined color wherein the color is selected based on sensor data which provide information either about the vehicle itself, information about the outside environment of the vehicle or information about the interior. Accordingly no additional components such as light sources need to be installed in the vehicle for this lighting effect and the free space on the displays in the vehicle can be used to generate a desired atmosphere in the vehicle cabin.

Furthermore the corresponding method for operating the vehicle lighting system is provided wherein the lighting system comprises the display system with at least one display, an interface receiving the sensor data related to the vehicle environment and a control unit wherein the method comprises at the control unit steps of receiving the sensor data, determine a free part of the display system not used for displaying information. Furthermore a color is determined for the free part of the display system based on the sensor data and the free part is illuminated with the determined color.

It is to be understood that the features mentioned above and features yet to be explained below can be used not only in the respective combinations indicated, but also in other combinations or in isolation without departing from the scope of the present invention. Features of the above-mentioned aspects and embodiments described below may be combined with each other in other embodiments unless explicitly mentioned otherwise.

### Brief description of the Drawings

The foregoing and additional features and effects of the application will become apparent from the following detailed description when read in conjunction with the accompanying drawings in which like reference numerals refer to like elements.
Fig. 1 shows a schematic architectural view of a vehicle lighting system configured to use a part of the display system for illuminating the vehicle cabin.
Fig. 2 shows a schematic view of a part of a vehicle cabin including unused parts of the display system which can be used for illuminating.
Fig. 3 shows a further schematic view of displays of a vehicle display system which can be used for illuminating a vehicle interior with a desired color.
Fig. 4 shows an example flowchart of a method carried out by the vehicle system of Fig. 1. Fig. 5 shows an example schematic representation of the control unit used in the lighting system for illuminating parts of the display.

Fig. 5 shows a schematic view of a control unit configured to control a lighting of a vehicle cabin using un-used parts of a vehicle display system.

### Detailed description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

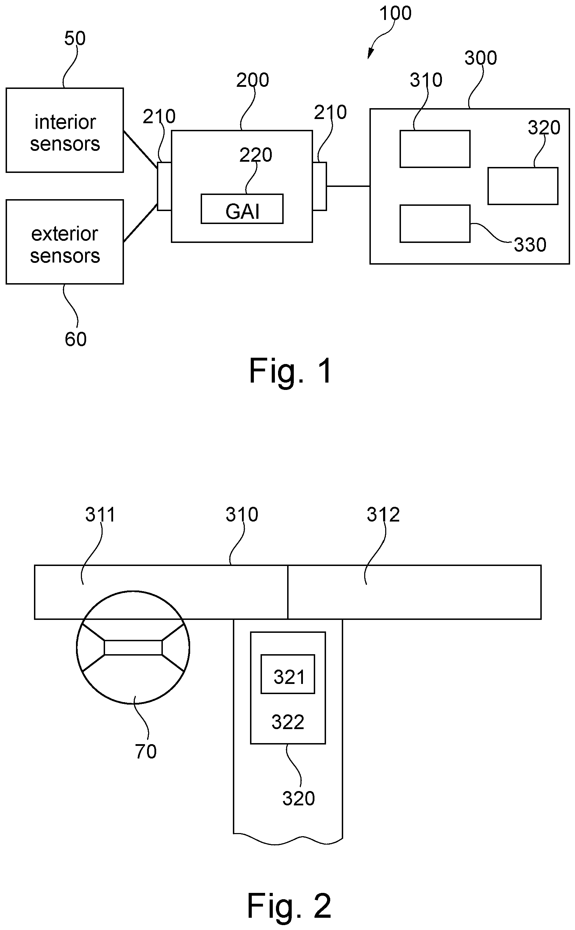

Fig. 1 shows a schematic view of a vehicle lighting system 100 which can use existing display parts provided in a vehicle for illuminating a vehicle cabin with a desired color. The system 100 comprises a control unit 200 which is configured to control information shown on a display system 300. The display system 300 can include different displays 310, 320 or 330 which may be provided in any part of the vehicle cabin such as the dashboard, the middle console or in the rear part of the vehicle cabin where passengers in the back can use the corresponding displays. The system 100 and especially the control unit 200 receives input from different sensors provided at the vehicle or in the vehicle. The sensors may be fixedly connected to the vehicle or may also be attached to one of the passengers in the vehicle. The sensors may be schematically divided into interior sensors 50 meaning that those sensors measure or determine signals and data coming from the interior part of the vehicle such as the vehicle cabin, passengers in the vehicle or which may come from the vehicle itself. An example for such a sensor is a temperature sensor measuring the temperature inside the vehicle cabin or the sensor detecting any signal provided in a vehicle, by way of example on a data bus of the vehicle such as the vehicle speed, the speed of rotation of the motor, the number of passengers in a vehicle. The interior sensors may include cameras detecting the number of passengers inside the vehicle. The cameras may also monitor the driver in order to detect the driver's mood or the driver's alertness. Additionally exterior sensors 60 are provided which are able to measure data such as the outside temperature, the visibility, the brightness. The exterior sensors may include cameras, radar sensors or any other sensor configured to detect parameters of the direct vehicle environment. The sensor data from the interior sensors 50 and/or exterior sensors 60 are fed to the control unit using input interface 210. The control unit 200 can include logic which is able to determine which part of the display system 300 is currently not used for displaying information to any of the passengers in the vehicle when the control unit is the unit controlling the displaying of information. The control unit 200 can be configured to determine which part of a display such as display 310, 320, or 330 is used for displaying information to the driver or any other passenger of the vehicle. Accordingly the control unit 200 can determine for each of the displays 310, 320 or 330, which of the displays are not used at all for displaying information and is configured to determine whether a certain section of the corresponding display is not used for displaying information so that a remaining section or part of unused display remains which could be used to be illuminated by a certain color.

When a separate display controller (not shown) is used, this information may be provided from the display controller to control unit 200. The control unit 200 can contain a generative artificial intelligence, GAI 220 which is configured to process the sensor data received from the sensors 50 and/or 60 and which is configured to determine a color which should be used for illuminating the unused area of the car displays which has been determined in advance by the control unit or which was fed to the control unit using other components in the vehicle. The control unit 200 can include a component of artificial intelligence such as component 220, however it should be understood that such a component need not to be provided and the control unit can include other means such as a database which links the different sensor data to different colors so that based on sensor data a defined color is determined which is used to display the free part of the display system not used for displaying information.

The generative artificial intelligence 220 can include a recurrent neural network, RNN, or a variant like long short-term memory, LSTM. The input of the sensor data may be encoded into a fixed size vector by an embedding layer of the network and the encoder and decoder layers can process the encoded input and generate the color output wherein the color values can be output in any desired format such as RGB, HEX etc.. It should be understood that the invention is not restricted to those models or encodings. The generative artificial intelligence 220 can include any kind of model and any kind of data encoding can be used.

The model can be trained on a data set using a loss function that measures the dissimilarity between the predicted color and the ground truth color and an optimization algorithm like stochastic gradient descent, SGD might be used to minimize the loss. The model's performance may be evaluated using metrics like mean squared error for color value prediction. Once the model is trained and evaluated, it can be used for generating colors based on the input data.

The control unit 200 may further include an input unit (not shown) by which a user of the system or a passenger of the vehicle can input predefined relationships indicating, based on which sensor data, which color should be selected. Accordingly it is possible to personalize the system as the driver or any other user of the system can determine which color should be displayed depending on the sensor data.

In the following some examples are given for the sensor data which might be detected. The exterior sensors 60 may detect the brightness such as the amount of daylight present and the weather conditions, whether it is raining or not whereas the interior sensors may show that the driver is getting drowsy and distracted. This might be determined based on images generated by a camera monitoring the interior of the vehicle, especially the driver. The data may also be generated by wearables which are attached to the driver or any other passenger in the vehicle. These interior sensors 50 could collect physiological data of the vehicle passenger and transmit the physiological data to the control unit. The determination whether the driver is getting drowsy and distracted or whether the driver is alert, can either be already present in the sensor data as received or this piece of information may be extracted within the control unit by postprocessing the received images. Depending on the weather condition or the physiological parameters a defined color may be selected and displayed on the un-used part of the display system 300.

Fig. 2 shows a schematic view of part of a vehicle dashboard including a steering wheel 70 and a large display 310 which nearly covers the complete width of the vehicle. This display can include a first area or part 311 which is used to display information necessary for the driver to control the vehicle. However, the display can include a second free part of the display, the part 312, which is not used for displaying any kind of information at all so that the free part 312 can be illuminated by a desired color. By way of example when it is detected that the driver is getting drowsy and distracted, the free part may be illuminated in a color which tends to wake up the driver and which makes the driver less drowsy or more alert such as a blue light which is said to wake up human beings. In the same way, a display 320 is shown in a middle console wherein the display 320 comprises a part 321 which is used for displaying information such as map data used for navigating the driver to a destination. However, there is a second unused part, the free part 322 which is not used for displaying information. This free part can be detected and illuminated by any desired color. Furthermore it is possible that the outside sensors detect the outside temperature, the visibility or a brightness level. Depending on this information, a color may be defined which should be used for displaying. During daylight a first color might be used whereas during nighttime another different color might be used for illuminating the free part of the display.

It should be understood that the user of the system can adapt the system and the colors output to his or her needs so that based on a certain situation measured by the sensor data a defined color is output.

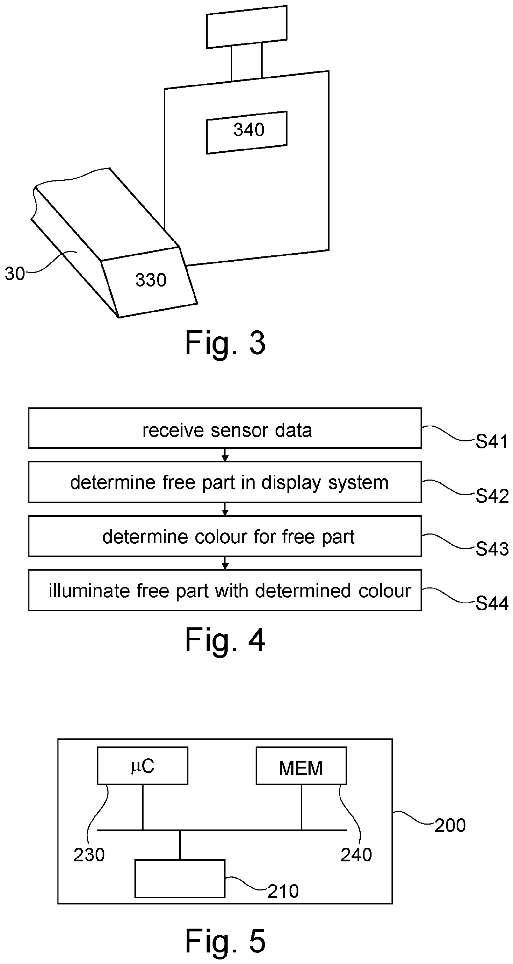

Fig. 3 shows further locations for displays such as at the rear end of the middle console 30 where display 330 is provided which can be used by the passengers in the back for displaying any kind of information such as movies. Furthermore, a display 340 is schematically shown incorporated into or attached to a backrest of a front vehicle seat. Display 330 and/or display 340 may not be used at all so that the free part of the display corresponds to the complete display surface which can be used to illuminate the vehicle cabin with a certain color. Furthermore it is possible that only certain sections of the displays 330 or 340 are used so that a free part remains in display 340 or 330 which can be illuminated with a desired color.

Furthermore it is possible that the interior sensors include pressure sensors or any other sensors such as cameras which are able to detect which part of the vehicle is occupied by a passenger and the displays provided for a certain part of the vehicle where no passenger is present might be used as a free part of the display system that is available for illumination.

Fig. 4 shows a schematic method how the system 100 can operate. In a first step S41 the sensor data such as from the interior sensors 50 an/or the exterior sensors 60 are received which describe or represent a certain situation either within the vehicle or outside the vehicle. Furthermore, the free part of the display system is determined in step S42. As discussed above this can be a part not used by any of the passengers in the vehicle where currently no pieces of information are displayed. In step S43 the color for the free part is determined based on the received sensor data using predetermined relationships between the sensor data and the colors. In step S44 the free part is illuminated with the determined color.

Fig. 5 shows a schematic architectural view of the control unit 200 in a further embodiment. The control unit 200 can include an interface 210 operating as input output unit configured to receive the sensor data and configured to transmit commands to the display system. The control entity comprises a processing unit 230 which is responsible for the operation of the control unit 200. The processing unit 230 can include one or more processors and carry out instructions stored on a memory 240, wherein the memory may include a read-only memory, a random access memory, a mass storage, a hard disk or the like. The memory can furthermore include suitable program code to be executed by the processing unit 230 so as to implement the above-described functionalities of the determination of the color based on the sensor data. The control unit 200 can either include the generative artificial intelligence (GAI) 220 shown in Fig. 1 or may have access to this GAI 220 and this . However it should be understood that the generative artificial intelligence 220 need not to be provided in the situation as shown in Fig. 5.

The invention is not only applicable to screen displays but also to other display technologies in a vehicle such as head up displays on the windshield or projections on side or back windows or any other display technology.

From the above said some general conclusions can be drawn.

The received sensor data may include an indication which seats of the vehicle are occupied by a passenger or not wherein the display system comprises a plurality of displays. The control unit 200 can be configured to determine at least one unused display or display part such as part 312 of Fig. 2 of the plurality of displays based on the received indication and to illuminate the at least one unused display with the determined color. As discussed above the unused display may include the complete surface of a display or may only include a part of the display. When no passenger is detected for the display which is sitting in front of the corresponding display a complete display might be used for illumination.

The at least one display can be a front display of a vehicle extending to an area located in front of a co-driver's seat and the free part of the display system may be the area located in front of the co-driver's seat as shown by the free part 312 in Fig. 2.

The received sensor data can include information allowing to determine an alertness level of the driver of the vehicle and the control unit may be configured to illuminate the free part with a defined color when the information indicates that the alertness level is below a predefined threshold level. This can mean that a color is selected which is known to increase the alertness level such as a blue color or any other color which is either selected by the user or is provided to the system.

Furthermore it is possible that the received sensor data include information allowing to determine a brightness level of the environment in which the vehicle is moving and the control unit can be configured to determine the color for the free part in dependence on the brightness level. Here, different colors might be used depending on the fact whether the vehicle is driving in daylight or by night or how the visibility is based on the weather conditions. The displayed color may also transport a warning when a certain temperature is reached which informs the driver that an icy road or a road full of snow is to be expected.

The control unit may include a generative artificial intelligence such as the intelligence 220 which is configured to generate as output the color for the free part based on the sensor data received as input to the generative artificial intelligence.

The interface may include a wireless receiver configured to receive physiological data as sensor data from a variable of one of the passengers from the vehicle and the control unit can then be configured to determine the color based on the received physiological data. By way of example the physiological data can also provide a hint about the alertness or the physical condition of the driver. And based on the physiological data a certain color may be used for illumination.

It is possible that the interface is configured to receive passenger preferences for colors in dependence on the sensor data and the control unit is then configured to determine the color for the free part based on the sensor data and the passenger preferences.

The display system can include a display provided at the dashboard of the vehicle or a display provided for any of the front passengers and the display can include a display provided for passengers for the rear seats of the vehicle.

Summarizing an effective way for illuminating an inside of a vehicle cabin is provided where no additional extra light sources are necessary to generate a certain atmosphere within a vehicle cabin.

## Claims

1. A vehicle lighting system (100) comprising:
- a display system (300) comprising at least one display (310-330),
- an interface (210) configured to receive sensor data related to a vehicle environment,
- a control unit configured to control the display system, to receive the sensor data and to determine a free part of the display system not used for displaying information needed by any passenger of the vehicle, wherein the control unit is configured to determine a color for the free part of the display system based on the sensor data and to illuminate the free part with the determined color.

2. The vehicle lighting system of claim 1, wherein the received sensor data include an indication which seats of the vehicle are occupied by a passenger, the display system comprising a plurality of displays, wherein the control unit is configured to determine at least one unused display of the plurality of displays based on the received indication, and to illuminate the at least one unused display with the determined color.

3. The vehicle lighting system of claim 1 or 2, wherein the at least one display is a front display of a vehicle extending to an area located in front of a co-drivers seat, wherein the free part of the display system is the area located in front of the co-drivers seat.

4. The vehicle lighting system of any preceding claim, wherein the received sensor data include information allowing to determine an alertness level of a driver of the vehicle, wherein the control unit is configured to illuminate the free part with a defined color when the information indicates that the alertness level is below a predefined threshold level.

5. The vehicle lighting system of any preceding claim, wherein the received sensor data include information allowing to determine a brightness level of the environment in which the vehicle is moving, wherein the control unit is configured to determine the color for the free part in dependence of the brightness level.

6. The vehicle lighting system of any preceding claim, wherein the control unit comprises a generative artificial intelligence configured to generate as output the color for the free part based on the sensor data received as input to the generative artificial intelligence.

7. The vehicle lighting system of any preceding claim, wherein the interface comprises a wireless receiver configured to receive physiological data as sensor data from a wearable of one of the passengers from the vehicle, wherein the control unit is configured to determine the color based on the received physiological data.

8. The vehicle lighting system of any preceding claim, wherein the interface is configured to receive passenger preferences for colors in dependence on the sensor data, wherein the control unit is configured to determine the color for the free part based on the sensor data and the passenger preferences.

9. The vehicle lighting system of any preceding claim, wherein the at least one display comprises at least one of the following:
- a display provided in a dashboard of the vehicle,
- a display provided for passengers for rear seats of the vehicle.

10. A method for operating a vehicle lighting system comprising a display system with at least one display, an interface receiving sensor data related to a vehicle environment and a control unit, the method comprising at the control unit:
- receiving the sensor data,
- determining a free part of the display system not used for displaying information needed by any passenger of the vehicle,
- determining a color for the free part of the display system based on the sensor data, and
- illuminate the free part with the determined color.

11. The method of claim 10, the received sensor data includes an indication which seats of the vehicle are occupied by a passenger, the display system comprising a plurality of displays, wherein at least one unused display of the plurality of displays is determined based on the received indication, wherein the at least one unused display is illuminated with the determined color.

12. The method of claim 10 or 11, wherein the received sensor data include information allowing to determine an alertness level of a driver of the vehicle, wherein the free part is illuminated with a defined color when the information indicates that the alertness level is below a predefined threshold level.

13. The method of any of claims 10 to 13, wherein the received sensor data include information allowing to determine a brightness level of the environment in which the vehicle is moving, wherein the color for the free part is determined in dependence of the brightness level.

14. The method of any of claims 10 to 13 further receiving physiological data as sensor data from a wearable of one of the passengers from the vehicle, wherein the color is determined based on the received physiological data.

15. The method of any of claims 10 to 14, wherein the received sensor data include information allowing to determine a brightness level of the environment in which the vehicle is moving, wherein the color for the free part is determined in dependence of the brightness level.
